# EUROPEAN PATENT SPECIFICATION

(11) **EP 2 849 005 B1**
(45) Date of publication and mention of the grant of the patent: **07.08.2019**
(21) Application number: 12876411.5
(22) Date of filing: 10.05.2012
(51) Int. Cl.: G05B 9/03, G06F 11/07, G06F 11/20

(54) **STANDBY DUAL REDUNDANT SYSTEM**
REDUNDANTES DOPPELTES STANDBY-SYSTEM
SYSTÈME REDONDANT DOUBLE DE VEILLE

(43) Date of publication of application: 18.03.2015
(73) Proprietor: Mitsubishi Electric Corporation, Tokyo 100-8310 (JP)
(72) Inventor: NOMURA Akihiro, Tokyo 100-8310 (JP)
(74) Representative: Sajda, Wolf E.
(86) International application number: PCT/JP2012/062003
(87) International publication number: WO 2013/168258

(56) References cited:
- EP-A2- 1 672 506
- GB-A- 2 477 237
- JP-A- H0 816 534
- JP-A- H0 944 203
- JP-A- H02 156 363
- JP-A- H04 241 035
- JP-A- H06 348 527
- JP-A- H07 200 044
- JP-A- 2000 305 919
- JP-A- 2006 031 727
- JP-A- 2008 047 052
- JP-A- 2009 187 314
- JP-A- 2009 294 961
- JP-A- 2011 253 390
- US-A- 4 608 631
- US-A1- 2003 172 330

## Description

### TECHNICAL FIELD

The present invention relates to a standby dual redundant system with dual controllers each having multiple CPUs to perform different calculations by the respective CPUs in a constant cycle.

### BACKGROUND ART

Conventionally, as an equalization controller for data in the case of using multiple CPUs, the CPUs have respective system bus controllers, and each CPU is connected to a system bus via the system bus controller. As an example of such configurations, a standby dual redundant system as shown in Patent Document 1 is proposed.

In this system, equalization data is transmitted from an active-side CPU to a standby-side CPU by using the system bus controller, thereby realizing data equalization between the two controllers. Document GB2477237 discloses a primary controller and a backup controller, where program code stored on the primary controller is synchronized to the backup controller.

### LIST OF CITATIONS

### PATENT DOCUMENTS

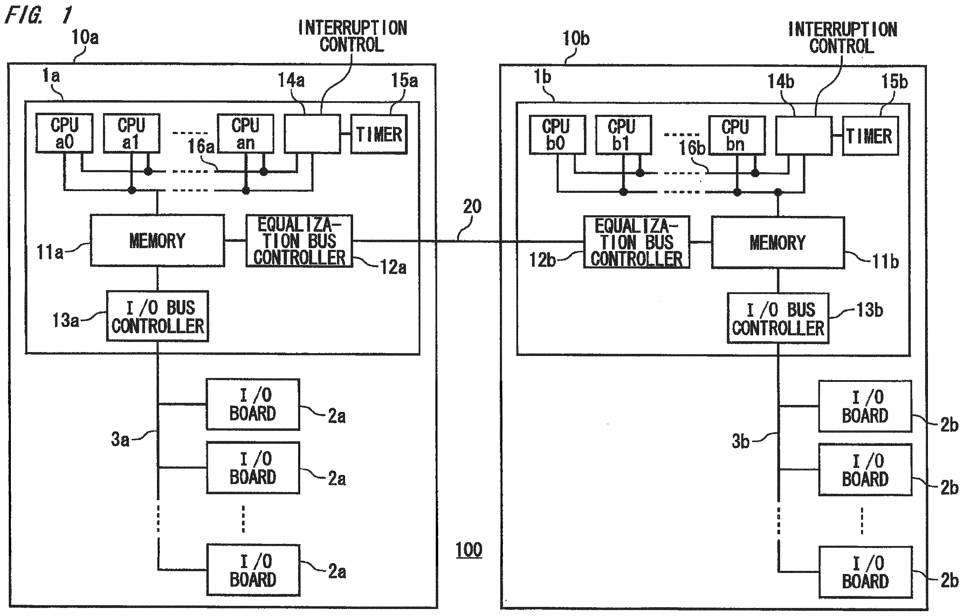

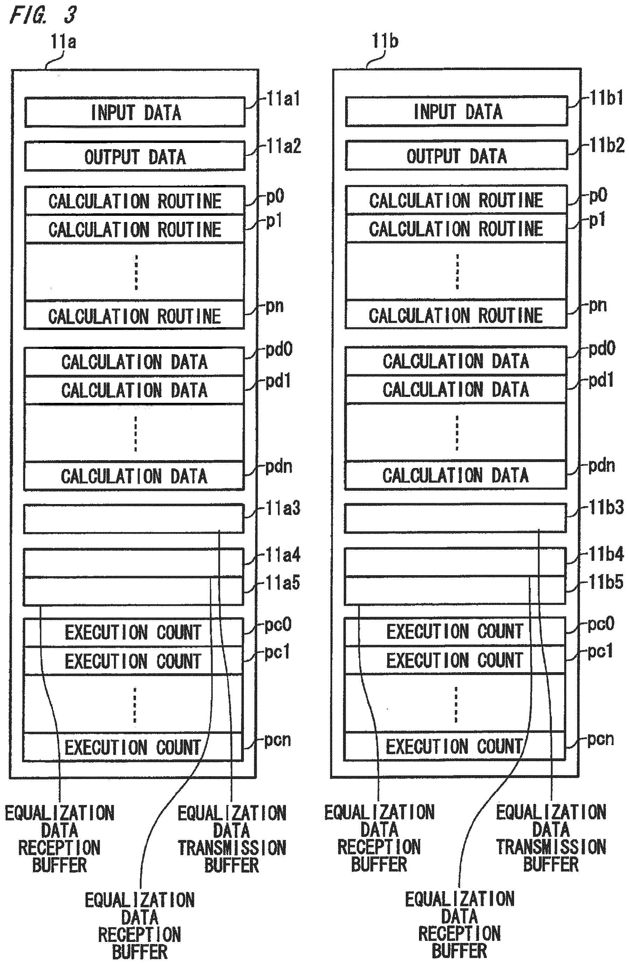

- Patent Document 1:: Japanese Laid-Open Patent Publication JP-A-2002-149 212
(paragraphs [0020] to [0022], FIG. 1, FIG. 3)

### SUMMARY OF THE INVENTION

### PROBLEMS TO BE SOLVED BY THE INVENTION

In a standby dual redundant system having multiple CPUs each performing a different calculation in a constant cycle, a bus is provided for transferring data to be equalized from an active-side CPU to a standby-side CPU. In the equalization controller shown in Patent Document 1, since each CPU has the bus controller for equalizing data, if the number of the CPUs increases, the same number of bus controllers as the increased CPUs are required.

Thus, there is a problem that the circuit scale is enlarged.

In addition, transmission/reception of equalization data and transmission/reception of data with an I/O board use the same system bus. Therefore, transmission/reception of equalization data and transmission/reception with the I/O board cannot be performed simultaneously, and thus there is a problem that response of data transfer cannot be improved.

The present invention has been made to solve the above problems, and an object of the present invention is to provide a standby dual redundant system that can suppress the circuit scale without increasing the number of bus controllers even if the number of CPUs increases, and allows simultaneous execution of transmission/reception of equalization data between controllers and transmission/reception of data between an I/O board and a CPU.

### SOLUTION TO THE PROBLEMS

A standby dual redundant system according to the present invention includes two controllers such that, when one of the controllers operates as an active-side controller, the other controller operates as a standby-side controller, each controller having therein: a plurality of CPUs; a memory; an I/O board; an I/O bus controller for performing transmission and reception of data among the plurality of CPUs, the memory, and the I/O board; and an equalization bus controller for transmitting equalization data used for equalizing device states of the active-side controller and the standby-side controller, from the active-side controller to the standby-side controller via an equalization data bus, the equalization bus controller being independent from the I/O bus controller.

### EFFECT OF THE INVENTION

In the standby dual redundant system according to the present invention, each controller has therein: a plurality of CPUs; a memory; an I/O board; an I/O bus controller for performing transmission and reception of data among the plurality of CPUs, the memory, and the I/O board; and an equalization bus controller for transmitting equalization data used for equalizing device states of the active-side controller and the standby-side controller, from the active-side controller to the standby-side controller via an equalization data bus, the equalization bus controller being independent from the I/O bus controller.

Therefore, it becomes unnecessary to provide a bus controller for each CPU in equalization processing for data to be processed by a plurality of CPUs.

In addition, since the equalization data bus and the I/O bus are configured as independent buses, and their respective bus controllers are also independent from each other, it becomes possible to perform transmission/reception of equalization data and transmission/reception with the I/O board simultaneously, thus realizing high-speed processing. The invention is disclosed in the appended claims.

### BRIEF DESCRIPTION OF THE DRAWINGS

- FIG. 1: is a diagram showing the configuration of a standby dual redundant system according to Embodiment 1 of the present invention.
- FIG. 2: is a diagram showing the configuration of an interruption control in the standby dual redundant system according to Embodiment 1 of the present invention.
- FIG. 3: is a diagram showing the configuration of a memory in the standby dual redundant system according to Embodiment 1 of the present invention.
- FIG. 4: is a diagram showing the configuration of equalization data transmission data in the standby dual redundant system according to Embodiment 1 of the present invention.
- FIG. 5: is a flowchart showing an operation of a CPU a0 of an active-side controller in the standby dual redundant system according to Embodiment 1 of the present invention.
- FIG. 6: is a flowchart showing an operation of a CPU a1 of the active-side controller in the standby dual redundant system according to Embodiment 1 of the present invention.
- FIG. 7: is a flowchart showing an operation of a CPU b0 of a standby-side controller in the standby dual redundant system according to Embodiment 1 of the present invention.
- FIG. 8: is a flowchart showing an operation of a CPU b1 of the standby-side controller in the standby dual redundant system according to Embodiment 1 of the present invention.
- FIG. 9: is a timing chart showing an operation of the standby dual redundant system according to Embodiment 1 of the present invention.
- FIG. 10: is a timing chart showing an operation of the standby dual redundant system according to Embodiment 1 of the present invention.
- FIG. 11: is a flowchart showing an operation of a CPU a0 of an active-side controller in a standby dual redundant system according to Embodiment 2 of the present invention.
- FIG. 12: is a flowchart showing an operation of a CPU a1 of the active-side controller in the standby dual redundant system according to Embodiment 2 of the present invention.
- FIG. 13: is a diagram showing the configuration of a memory in a standby dual redundant system according to Embodiment 3 of the present invention.
- FIG. 14: is a timing chart showing an operation of the standby dual redundant system according to Embodiment 3 of the present invention.
- FIG. 15: is a timing chart showing an operation of the standby dual redundant system according to Embodiment 3 of the present invention.
- FIG. 16: is a diagram showing the configuration of a memory in a standby dual redundant system according to Embodiment 4 of the present invention.
- FIG. 17: is a diagram showing the configuration of a memory in a standby dual redundant system according to Embodiment 5 of the present invention.
- FIG. 18: is a diagram showing the configuration of a standby dual redundant system according to Embodiment 6 of the present invention.
- FIG. 19: is a diagram showing the configuration of equalization transmission data in the standby dual redundant system according to Embodiment 6 of the present invention.
- FIG. 20: is a diagram showing the configuration of a standby dual redundant system according to Embodiment 7 of the present invention.
- FIG. 21: is a diagram showing the configurations of common memories in the standby dual redundant system according to Embodiment 7 of the present invention.
- FIG. 22: is a diagram showing the configurations of individual memories in the standby dual redundant system according to Embodiment 7 of the present invention.
- FIG. 23: is a diagram showing the configuration of equalization data transmission data in a standby dual redundant system according to Embodiment 8 of the present invention.

### DESCRIPTION OF EMBODIMENTS

### Embodiment 1

Hereinafter, Embodiment 1 of the present invention will be described with reference to the drawings.

FIG. 1 is a diagram showing the configuration of a standby dual redundant system 100 (hereinafter, referred to as a system 100).

In FIG. 1, the system 100 includes an active-side controller 10a, a standby-side controller 10b, and an equalization data bus 20.

A calculation result of the active-side controller 10a is sent to the standby-side controller 10b via the equalization data bus 20.

The standby-side controller 10b has the same configuration as the active-side controller 10a. Therefore, the configuration of each controller will be described based on, mainly, the active-side controller 10a.

Here, the case where the two controllers are fixed as the active-side controller 10a and the standby-side controller 10b will be described. However, in practice, since the active-side controller 10a and the standby-side controller 10b have the same configuration, their roles may be replaced with each other.

The active-side controller 10a includes a CPU board 1a, a plurality of I/O boards 2a, and an I/O bus 3a. Input data needed for a calculation routine of the CPU board 1a is obtained by being read from the I/O board 2a via the I/O bus 3a.

In addition, output data that is a calculation result of the calculation routine of the CPU board 1a is written into the I/O board 2a via the I/O bus 3a.

Output of data to a device controlled by the system 100 is performed by the I/O board 2a in the active-side controller 10a.

Even if output data is written onto an I/O board 2b side in the standby-side controller 10b, data output to the device is cut in the I/O board 2b, so that the output data is not transmitted from the standby-side controller 10b to the device.

The CPU board 1a includes a plurality of CPUs from a CPU a0 to a CPU an, a memory 11a, an equalization bus controller 12a, an I/O bus controller 13a, an interruption control 14a which corresponds to an execution control section in claims, and a timer 15a.

The plurality of CPUs from the CPU a0 to the CPU an perform respective different calculations.

In the memory 11a, data used in calculation by each CPU is placed.

The I/O bus controller 13a performs data transmission between the memory 11a and the plurality of I/O boards 2a via the I/O bus 3a in accordance with a reading request or a writing request for data to be used by each CPU.

The equalization bus controller 12a of the active-side controller 10a transmits a result of calculation performed by each CPU of the active-side controller 10a, or the like, to an equalization bus controller 12b of the standby-side controller 10b via the equalization data bus 20.

The equalization bus controller 12b of the standby-side controller 10b stores the received data into a memory 11b of the standby-side controller 10b.

In addition, the interruption control 14a notifies each of the CPUs a0 to an of interruption, using an interruption signal bus 16a.

Further, the timer 15a is connected to the interruption control 14a, whereby a predetermined CPU can be notified of interruption at regular intervals.

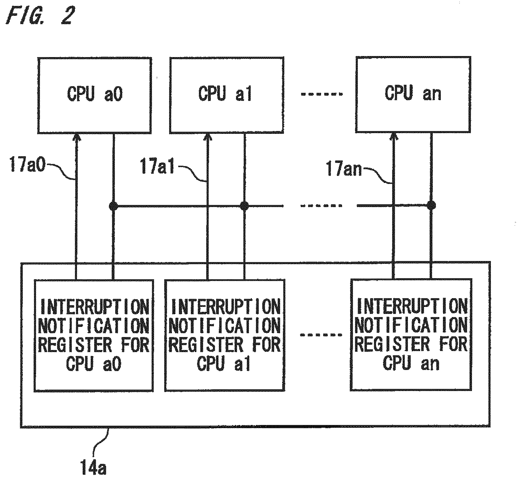

FIG. 2 is a diagram showing the configuration of the interruption control 14a.

The interruption control 14a is provided with respective interruption notification registers for the CPUs a0 to an. For example, when data is set in the interruption notification register for CPU a0, an interruption signal 17a0 to the CPU a0 is turned on, whereby the CPU a0 is notified of interruption.

The interruption notification registers and the interruption signals 17a0 to 17an are provided for the respective CPUs.

The interruption notification registers for the CPUs a0 to an are accessible from each other's CPU, and each CPU can notify another CPU of interruption.

FIG. 3 is a diagram showing the configuration of data stored in the memory 11a and the memory 11b.

The memory 11a and the memory 11b have the same configuration. Therefore, the memory 11a will be described.

Input data 11a1 is data obtained by being read from the I/O board 2a.

Output data 11a2 is data to be written into the I/O board 2a.

The input data 11a1 and the output data 11a2 are stored in a format used in transmission and reception between the I/O board 2a and a control target device.

In addition, in the memory 11a, calculation routines p0 to pn are stored, which are performed by the CPUs a0 to an, respectively.

Actually, the calculation routines p0 to pn each include processing (calculation 1) of converting, from the input data 11a1, data to be used in calculation by each CPU into a format suitable for the calculation, processing (calculation 2) of actually performing the calculation, and processing (calculation 3) of converting the calculation result into a data format suitable for output from the I/O board 2a.

In addition, in the memory 11a, data for calculation used in the calculation routines p0 to pn performed by the CPUs a0 to an are arranged in the order from calculation data pd0 to calculation data pdn for the respective CPUs.

Specific contents of these calculation data will be described with reference to the calculation data pd0 used by the CPU a0.

The calculation data pd0 is actually composed of a plurality of data.

These data are classified into three types of data.

The first type of data is data obtained by acquiring data to be used in the calculation routine p0 for CPU a0 from the input data 11a1 and then converting the data into a format suitable for the calculation 2 by the calculation 1 in the calculation routine p0.

The second type of data is composed of data obtained as a result of the calculation 2 in the calculation routine p0 and an accumulated data group of such data in the past.

The third type of data is data obtained by converting the resultant data of the calculation 2 in the calculation routine p0 into a format of output data to the I/O board 2a by the calculation 3 in the calculation routine p0.

Further, the memory 11a has an equalization data transmission buffer 11a3, an equalization data reception buffer 11a4, and an equalization data reception buffer 11a5.

The equalization data transmission buffer 11a3 is used when the controller operates as the active-side controller 10a.

The equalization bus controller 12a of the active-side controller 10a transmits a content of the equalization data transmission buffer 11a3 to the equalization bus controller 12b of the standby-side controller 10b.

In addition, in the transmission, the equalization bus controller 12a adds a checksum used for confirmation of the validity of the transmitted data.

The equalization data reception buffer 11a4 and the equalization data reception buffer 11a5 are used when the controller operates as the standby-side controller.

This point will be described below, with reference to an operation of the standby-side controller 10b.

The equalization bus controller 12b of the standby-side controller 10b confirms data received from the active-side controller 10a, by using a checksum.

Then, if the received data is determined to be valid, the received data is stored alternately into an equalization data reception buffer 11b4 or an equalization data reception buffer 11b5. If the received data is determined to be invalid, the received data is discarded.

At this time, the other reception buffer that is not used for the data reception by the equalization bus controller 12b on the standby side is used for data processing by the CPU on the standby side.

Here, the description returns to the active-side controller 10a.

In the memory 11a of the active-side controller 10a, the numbers of times the calculation routines p0 to pn are respectively executed by the CPUs a0 to an, are stored as execution counts pc0 to pcn.

Even in the case of overflow, these count values do not become abnormal but are counted again from 0.

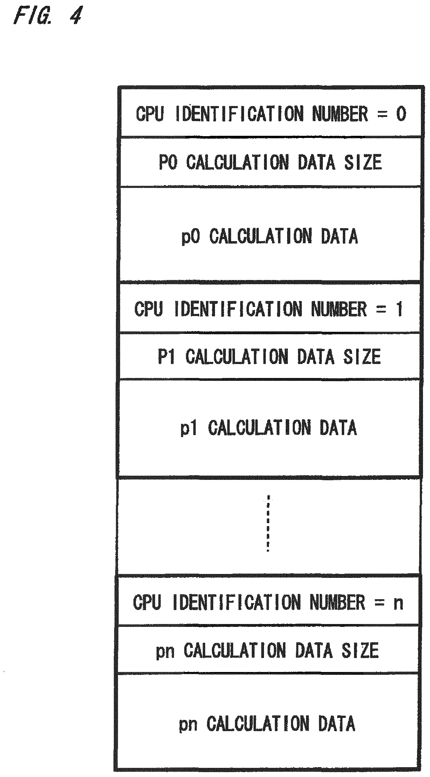

FIG. 4 is a diagram showing the configuration of transmission data stored in the equalization data transmission buffer 11a3.

Three types of data, i.e., an identification number of each CPU, a calculation data size needed for storing a result of the calculation routine for each CPU, and the calculation data, are stored as one set, and the respective sets of data of the calculation routine p0 for the CPU a0 to the calculation routine pn for the CPU an are joined with each other.

Next, an operation of the active-side controller 10a will be described.

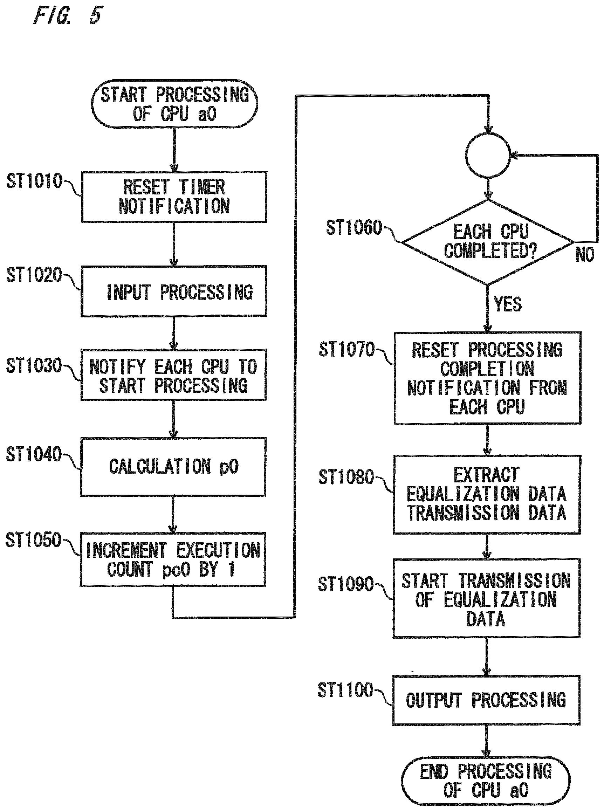

FIG. 5 is a flowchart showing an operation of the active-side controller 10a.

The timer 15a and the interruption control 14a of the active-side controller 10a are set in advance so as to notify the CPU a0 of interruption at intervals of a cycle T.

First, based on the interruption notification, the CPU a0 of the active-side controller 10a starts processing.

First, in Step ST1010, the notification from the timer 15a indicating that the cycle T has elapsed is reset.

This reset is performed for waiting for the next notification of the cycle T from the timer 15a.

Next, in Step ST1020, data is input from the I/O board 2a.

The CPU a0 requests the I/O bus controller 13a to read input data from the I/O board 2a.

In response to the reading request, the I/O bus controller 13a reads data from a plurality of I/O boards 2a via the I/O bus 3a, and stores the read data as the input data 11a1 into the memory 11a.

Next, in Step ST1030, the CPU a0 notifies the other CPUs to start processing. Predetermined values are written into the respective interruption notification registers for the CPUs a1 to an in the interruption control 14a.

Then, the interruption control 14a turns on the interruption signals 17a1 to 17an, to give notification that interruption occurs to the CPUs a1 to an.

Next, in Step ST1040, the CPU a0 performs calculation of the calculation routine p0.

As described above, the calculation routine p0 includes processing (calculation 1) of converting data to be used in calculation by the CPU a0 into a format suitable for the calculation, processing (calculation 2) of actually performing the calculation, and processing (calculation 3) of converting the calculation result into a data format suitable for output from the I/O board 2a.

First, data in the input data 11a1, to be used in calculation by the CPU a0, is converted into a format suitable for calculation of the calculation routine p0, and then is stored as the calculation data pd0 (calculation 1).

Next, the main processing by calculation 2 is executed, and the calculation result is stored to be added to the calculation data pd0 (calculation 2).

Further, processing (calculation 3) of converting the calculation result by the calculation 2 into a format suitable for the I/O board 2a is performed, and the converted data is stored in the output data 11a2.

Next, in Step ST1050, the value of the execution count pc0 in the memory 11a, which indicates the number of times the calculation routine p0 has been executed, is incremented by one.

Next, in Step ST1060, completion of all the processes by the CPUs a1 to an described later is waited for.

Next, in Step ST1070, after all the processes by the CPUs a1 to an have been completed, processing completion notification from each CPU is reset, and thus processing completion notification in the next cycle is waited for.

Next, in Step ST1080, the resultant data of the calculation 1 and the resultant data of the calculation 2 (hereinafter, referred to as "p0 calculation data") in the calculation data pd0 to pdn are joined with each other, and the transmission data shown in FIG. 4 is stored into the equalization data transmission buffer 11a3.

Next, in Step ST1090, the CPU a0 instructs the equalization bus controller 12a to transmit the transmission data in the equalization data transmission buffer 11a3 to the standby-side controller 10b.

In response to the instruction from the CPU a0, the equalization bus controller 12a transmits the data in the equalization data transmission buffer 11a3 to the standby-side controller 10b.

Next, the CPU a0 issues an instruction to perform processing of Step ST1100 without waiting for completion of the transmission by the equalization bus controller 12a in Step ST1090.

In Step ST1100, processing of outputting data to the I/O board 2a is performed.

The CPU a0 requests the I/O bus controller 13a to perform writing from the output data 11a2 of the memory 11a into the I/O board 2a.

In response to the writing request, the I/O bus controller 13a writes the data into the I/O board 2a via the I/O bus 3a.

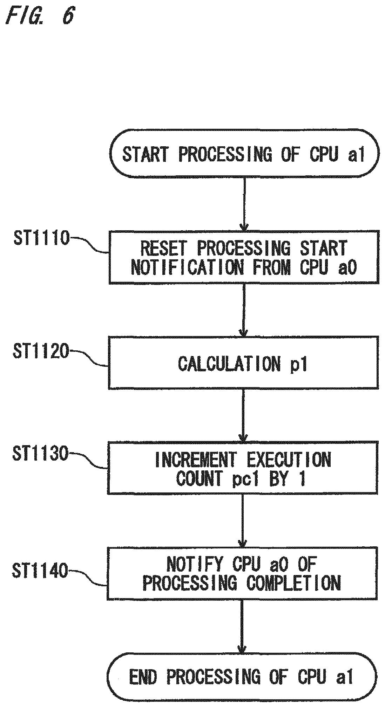

FIG. 6 is a flowchart showing an operation of the CPU a1 (to CPU an) of the active-side controller 10a.

Next, operations of the CPUs a1 to an other than the CPU a0 will be described with reference to FIG. 6.

Since the operations of the CPUs a1 to an are the same, in FIG. 6, the operation of the CPU a1 will be described.

First, when the CPU a1 has started processing in response to a processing start notification based on an instruction from the CPU a0, in Step ST1110, the processing start notification from the CPU a0 is reset.

This reset is performed for waiting for the next notification.

Next, in Step ST1120, calculation of the calculation routine p1 by the CPU a1 is performed. As described above, the calculation routine p1 includes processing (calculation 1) of converting data to be used in calculation by the CPU a1 into a format suitable for the calculation, processing (calculation 2) of actually performing the calculation, and processing (calculation 3) of converting the calculation result into a data format suitable for output from the I/O board 2a.

First, input data in the input data 11a1, to be used in calculation by the CPU a1, is converted into a format suitable for calculation in the calculation routine p1, and then is stored as the calculation data pd1 (calculation 1).

Next, the main processing by calculation 2 is executed, and the calculation result is stored to be added to the calculation data pd1.

Further, processing (calculation 3) of converting the calculation result by the calculation 2 into a format suitable for the I/O board 2a is performed, and the converted data is stored in the output data 11a2.

Next, in Step ST1030, the value of the execution count pc1 in the memory 11a, which indicates the number of times the calculation routine p1 has been executed, is incremented by one.

Next, in Step ST1140, the CPU a0 is notified of processing completion.

The notification of processing completion may be given via the interruption control 14a or may be given via the memory 11a.

Next, an operation of the standby-side controller 10b will be described. Also a timer 15b and an interruption control 14b of the standby-side controller 10b are set in advance so as to notify a CPU b0 of interruption at intervals of the cycle T, as in the active-side controller 10a.

It is noted that the active-side controller 10a and the standby-side controller 10b are not configured to synchronize their timings, but operate asynchronously.

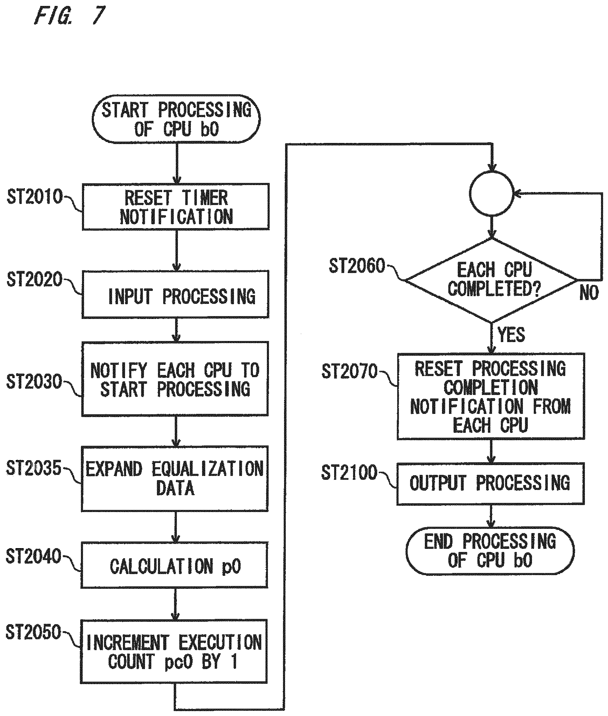

FIG. 7 is a flowchart showing an operation of the CPU b0 of the standby-side controller 10b.

Processing performed by the CPU b0 of the standby-side controller 10b based on interruption notification from the interruption control 14b will be described with reference to FIG. 7.

Processing in steps ST2010 to ST2030 is the same as processing in steps ST1010 to ST1030 in FIG. 5 performed by the CPU a0 of the active-side controller 10a.

Therefore, as in the case of the CPU a0 of the active-side controller 10a, the CPU b0 acquires data from the I/O board 2b, stores the data as the input data 11b1 in the memory 11b, performs data processing by itself, and then instructs the other CPUs to perform similar processing.

In Step ST2035, the CPU b0 confirms a content of an equalization data reception buffer that is different from a buffer by which the equalization bus controller 12b receives equalization data at present, and acquires the data size from a part where a CPU identification number of data is 0.

Next, the calculation data corresponding to the size is acquired and then expanded in the calculation data pd0 in the memory 11b.

At this time, a common part with the equalization data (a part corresponding to the resultant data of the calculation 1 and the resultant data of the calculation 2 described above) is to be overwritten with the equalization data.

It is noted that the data corresponding to the result of the calculation 2 is to be further overwritten by calculation in subsequent Step ST2040.

Processing in steps ST2040 to ST2070 and ST2100 is the same as processing in steps ST1040 to ST1070 and ST1100 performed by the CPU a0 of the active-side controller 10a in FIG. 5.

Regarding the I/O board 2b of the standby-side controller 10b, during a period in which this controller is operating as a standby-side controller, connection to a control target device is cut in the I/O board 2b, and therefore output data is not transmitted to the device.

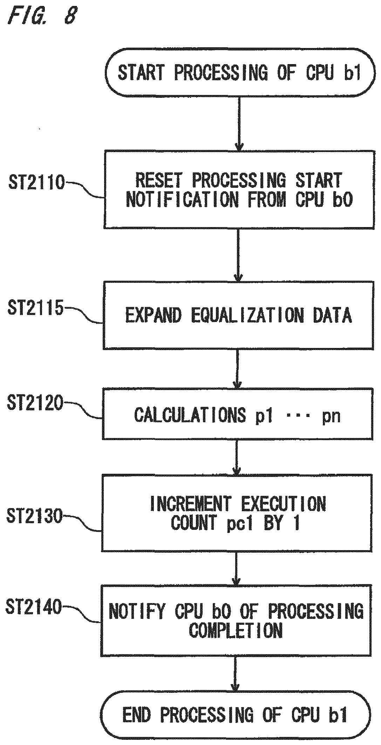

FIG. 8 is a flowchart showing an operation of a CPU b1 (to CPU bn) of the standby-side controller.

Next, operations of the CPUs b1 to bn other than the CPU b0 will be described with reference to FIG. 8.

Since the operations of the CPUs b1 to bn are the same, in FIG. 8, the operation of the CPU b1 will be described.

Processing in steps ST2110 and ST2120 to ST2140 is the same as processing in steps ST1110 and ST1120 to ST1140 in FIG. 6 performed by the CPU a1 of the active-side controller 10a.

A difference from FIG. 6 is that processing of Step ST2115 is added after Step ST2110.

In Step ST2115, as in Step ST2035 in FIG. 7, the CPU b1 confirms a content of an equalization data reception buffer that is different from a buffer by which the equalization bus controller 12b receives equalization data at present, and acquires the data size from a part where a CPU identification number of data is 1.

Then, the calculation data corresponding to the size is acquired and then expanded in the calculation data pd1 in the memory 11b.

At this time, a common part with the equalization data (a part corresponding to the resultant data of the calculation 1 and the resultant data of the calculation 2 described above) is to be overwritten with the equalization data.

It is noted that the data corresponding to the result of the calculation 2 is to be further overwritten by calculation in subsequent Step ST2120.

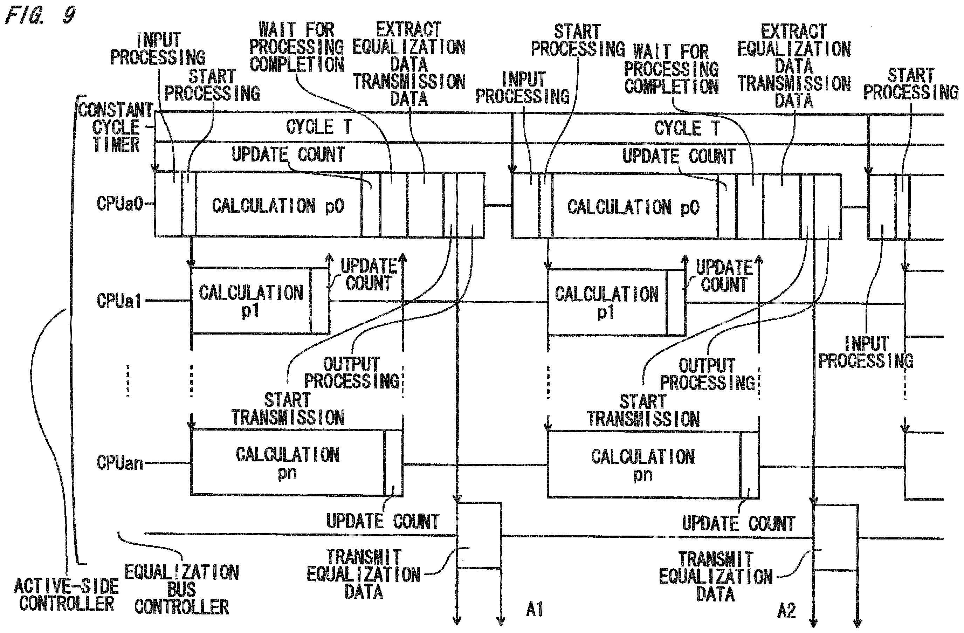

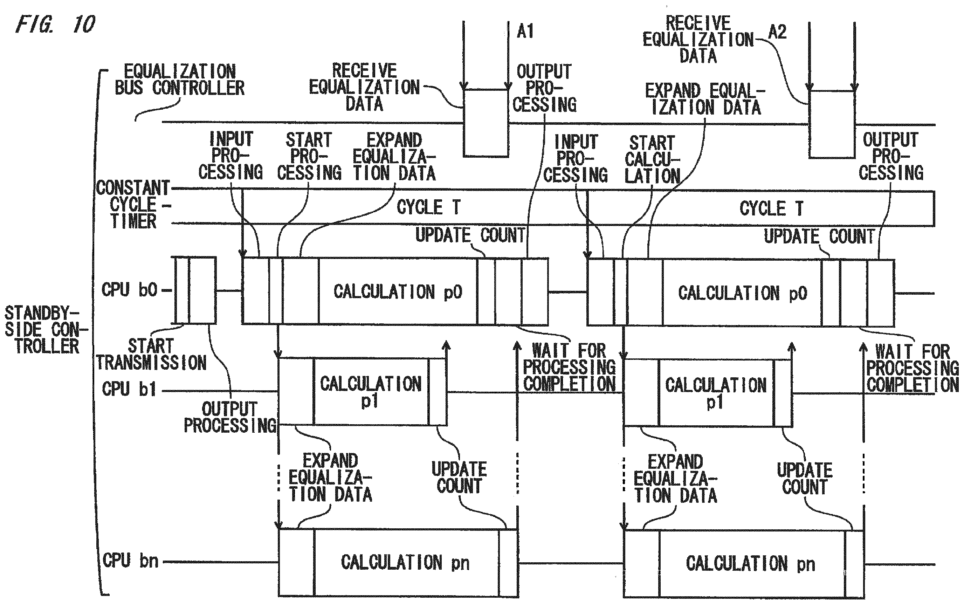

FIG. 9 and FIG. 10 are timing charts showing the summary of the operation of the system 100 described thus far.

An arrow in each chart indicates transmission of a signal or data.

Arrows A1 and A2 in FIG. 9 are linked with arrows A1 and A2 in FIG. 10.

Comparing two charts side by side, timings of the active-side controller 10a and the standby-side controller 10b can be visually understood.

The standby dual redundant system 100 according to Embodiment 1 of the present invention makes it unnecessary to provide a bus controller for each CPU in equalization processing for data to be processed by a plurality of CPUs.

In addition, since the equalization data bus 20 and the I/O buses 3a and 3b are configured as independent buses, and their respective I/O bus controllers are also independent from each other, it becomes possible to perform transmission/reception of equalization data and transmission/reception with each I/O board simultaneously, thus realizing high-speed processing.

### Embodiment 2

Hereinafter, Embodiment 2 of the present invention will be described focusing on a difference from Embodiment 1 with reference to the drawings.

In Embodiment 1, the interruption controls 14a and 14b are used for notifying each CPU to start processing.

In the present embodiment, instead of using interruption, a flag is provided for a timer, and ON/OFF of the flag is used as an interruption notification signal.

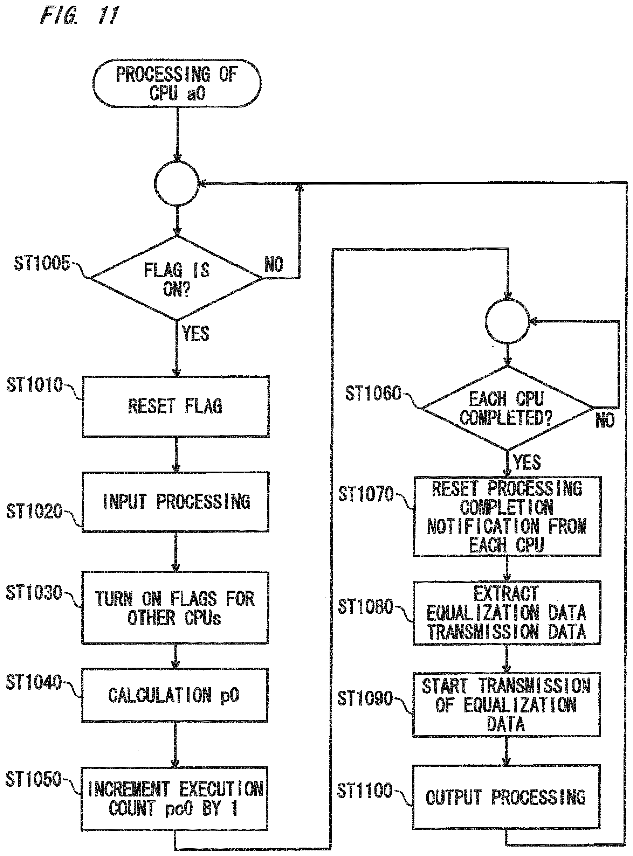

FIG. 11 is a flowchart showing an operation of the CPU a0 of the active-side controller according to the present embodiment.

The difference between FIG. 5 showing an operation of the CPU a0 of Embodiment 1 and FIG. 11 showing an operation of the CPU a0 of the present Embodiment is that, first, in FIG. 5, processing starts after interruption to start the processing occurs.

Secondly, in FIG. 11, the processing start flag is monitored by a loop of Step ST1005.

In the present embodiment, since the CPU a0 monitors the flag, independent interruption control is not needed.

In Step ST1005, when the CPU a0 confirms that the flag indicating start of processing is turned on, the flag is reset in Step ST1010, and then data input processing from the I/O board is performed in Step ST1020.

Next, in Step ST1030, each flag for instructing the other CPUs to start processing, which is provided in the timer or in a memory area, is turned on.

The other processing is the same as in Embodiment 1.

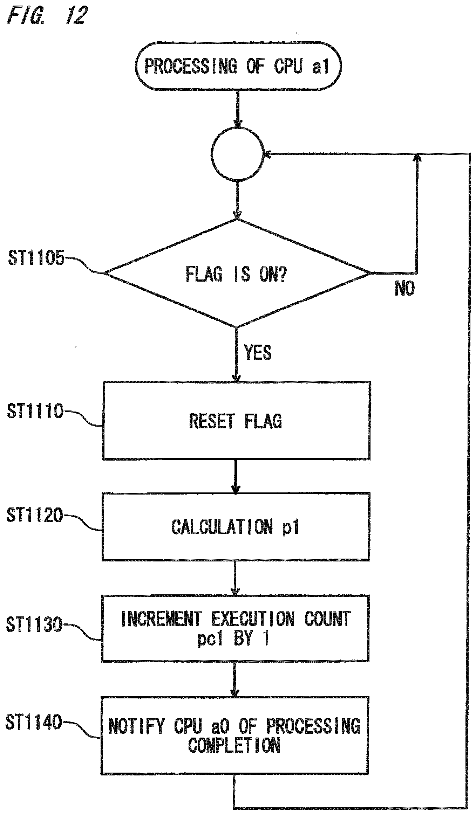

FIG. 12 is a flowchart showing an operation of the CPU a1 (to an) of the active-side controller according to the present embodiment.

The difference between FIG. 6 showing an operation of the CPU a1 of Embodiment 1 and FIG. 12 showing an operation of the CPU a1 of the present Embodiment is that, first, in FIG. 6, processing starts after interruption to start processing occurs.

Secondly, in FIG. 12, the processing start flag is monitored by a loop of Step ST1105.

In the present embodiment, since the CPU a1 monitors the flag, independent interruption control is not needed.

In Step ST1105, when the CPU a1 confirms that the flag indicating start of processing is turned on, the flag is reset in Step ST1110, and then the calculation p1 is performed in Step ST1120.

The other processing is the same as in Embodiment 1.

Although a flowchart for the standby-side controller 10b is not specifically shown, processing can be realized using a flag in a similar manner.

The standby dual redundant system according to Embodiment 2 of the present invention uses ON/OFF of a flag provided in the system as substitute for an interruption notification signal, thereby providing a simple standby dual redundant system that does not need special interruption control.

### Embodiment 3

Hereinafter, Embodiment 3 of the present invention will be described focusing on a difference from Embodiment 2 with reference to the drawings.

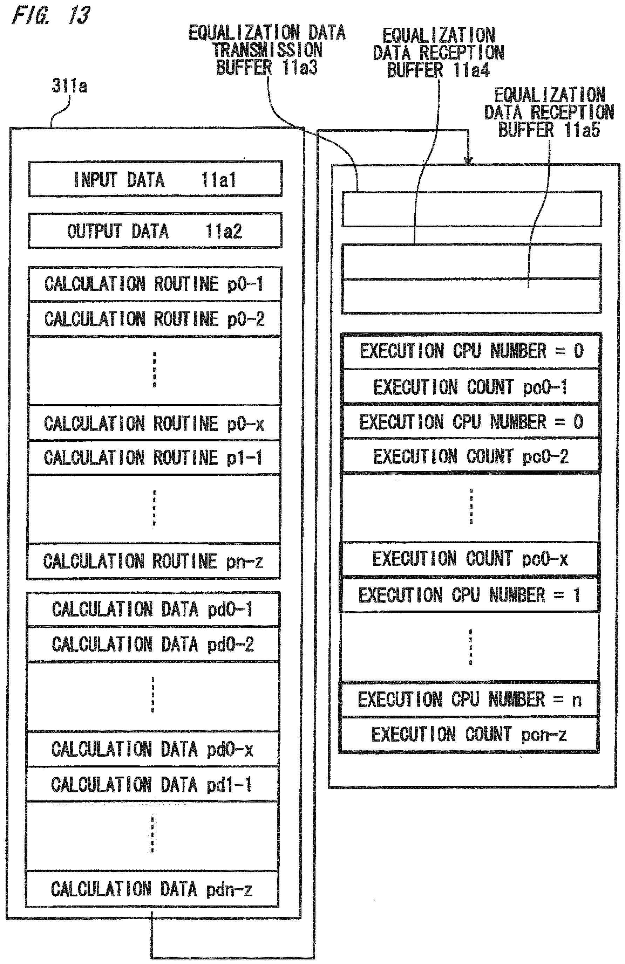

FIG. 13 is a diagram showing the configuration of data stored in a memory 311a of the active-side controller according to the present embodiment.

In the present embodiment, more calculation data and more calculation routines than the number of CPUs are provided.

A plurality of calculation routines are allocated to each CPU.

In FIG. 13, a numeric character following "p" indicates a number of each CPU that executes the corresponding calculation routine, and a numeric character following a hyphen indicates a serial number of each calculation routine allocated to the CPU having the above number.

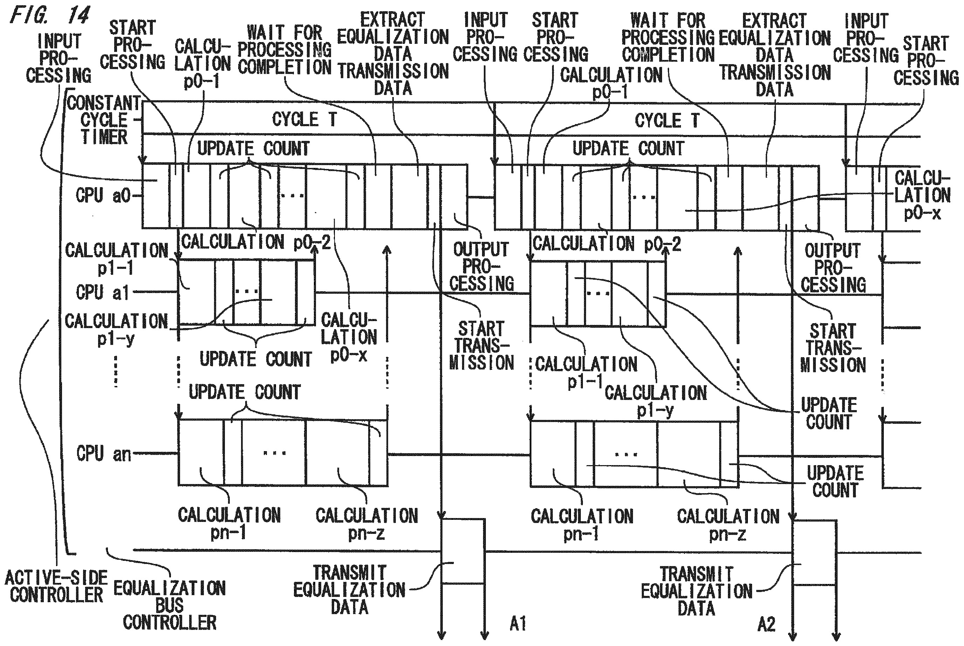

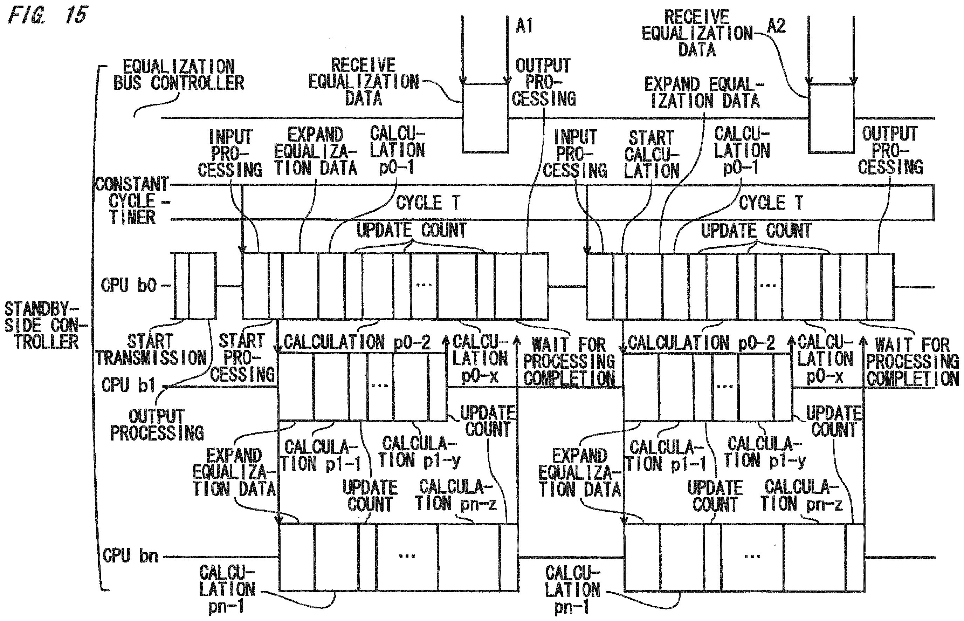

FIG. 14 and FIG. 15 are timing charts showing the operation states of the respective controllers of the standby dual redundant system according to the present embodiment.

An arrow in each chart indicates transmission of a signal or data.

Arrows A1 and A2 in FIG. 14 are linked with arrows A1 and A2 in FIG. 15.

Comparing two charts side by side, timings of the active-side controller and the standby-side controller can be visually understood.

By the above configuration of the memory 311a, as shown in FIG. 14 and FIG. 15, a plurality of calculations of calculation routines p0-1 to p0-x can be performed by the CPU a0 of the active-side controller, and similarly, a plurality of calculations of calculation routines p1-1 to pn-z can be performed by the CPUs a1 to an.

In the standby dual redundant system according to the present embodiment, the memory 311a is configured to have attribute data indicating a number of each CPU that executes a calculation routine, whereby each CPU can be assigned in advance with calculation routines to perform calculations in a multi-CPU environment.

### Embodiment 4

Hereinafter, Embodiment 4 of the present invention will be described focusing on a difference from Embodiment 3 with reference to the drawings.

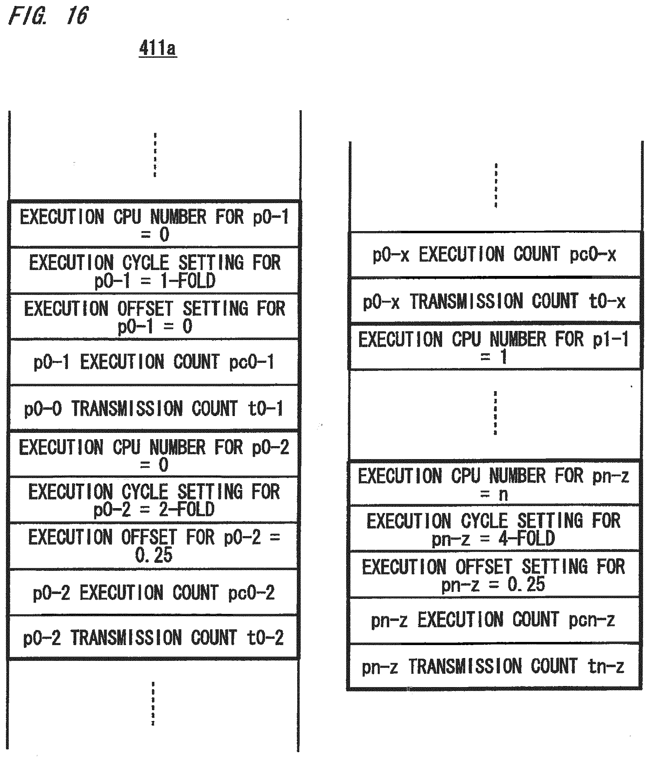

FIG. 16 is a diagram showing a part of the configuration of data stored in a memory 411a of the active-side controller.

For each calculation routine, setting items of an execution CPU number, an execution cycle setting, an execution offset setting, an execution count, and a transmission count are provided as attribute data.

By using the execution cycle setting item, it becomes possible to realize a calculation routine that is executed in a cycle of a multiple of the cycle T.

In addition, an execution offset can be set for the calculation routine that is executed in a cycle of a multiple of the cycle T.

In the execution offset setting, a timing to execute the calculation routine is set by a decimal number with the cycle T defined as 1.

For example, in the case where an execution offset is set at 0.25 for a calculation routine that is executed in a cycle of quadruple of the cycle T, the calculation routine is executed in a quadruple cycle of the cycle T and with a lag of 1/4 of the cycle T from the timer.

In the present embodiment, a calculation routine that operates in a cycle of a multiple of the cycle T exists as described above. That is, the calculation routines include the ones that operate in different cycles.

On the other hand, equalization data is transmitted in the cycle T. Therefore, it is not necessary to transmit data of a calculation routine that does not operate on a cycle T basis.

Therefore, in order to avoid retransmission of data of such calculation routines, the execution count and the transmission count are added in the memory 411a and are used.

When equalization transmission data is generated by the CPU a0 of the active-side controller, the transmission count is compared with the execution count, and if the two count values are different from each other, calculation data of the corresponding calculation routine is determined to be transmitted as equalization data, and is transmitted to the transmission buffer.

As a result of the comparison between the transmission count and the execution count, if they coincide with each other, it is determined that the data has been already transmitted and the corresponding calculation routine has not been newly executed, and the data is not transmitted to the transmission buffer.

It is noted that the transmission count is rewritten to the value of the execution count, after transmission processing to the transmission buffer is completed.

The standby dual redundant system according to the present Embodiment provides the execution cycle setting and the execution offset setting in the memory 411a, thereby executing calculation in a cycle of a multiple of the cycle T, and further, as necessary, with an execution offset set for each calculation routine.

In addition, by providing the transmission count and comparing the transmission count with the execution count, unnecessary transmission of equalization data is reduced, whereby time taken to transmit and receive equalization data can be shortened.

### Embodiment 5

Hereinafter, Embodiment 5 of the present invention will be described focusing on a difference from Embodiment 4 with reference to the drawings.

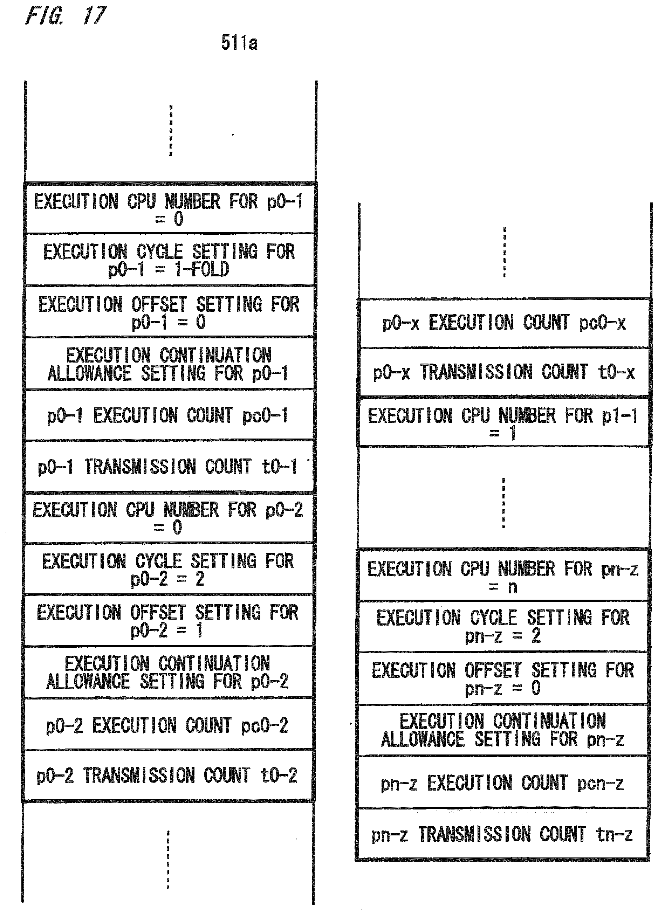

FIG. 17 is a diagram showing a part of the configuration of data stored in a memory 511a of the active-side controller.

An execution continuation allowance setting is added for the calculation routine to be executed by each CPU.

A mechanism is added in which, in the case where the execution continuation allowance setting is set at "allowed", even if the calculation has not been completed within the set cycle T, the calculation processing is temporarily held, to perform input and output of data, and then the calculation processing is restarted and continued at the next cycle.

As a result of the addition of the execution continuation allowance setting, input and output of data are performed in the middle of the calculation routine for which the calculation processing is held. However, as long as the input and output operation does not cause any problem, a calculation routine that operates within the constant cycle T and a calculation routine that does not operate within the constant cycle T can coexist.

The standby dual redundant system according to the present Embodiment can provide a standby dual redundant system that does not affect the processing as a whole even if some of the processing routines have greatly different processing times.

### Embodiment 6

Hereinafter, Embodiment 6 of the present invention will be described focusing on a difference from Embodiment 1 with reference to the drawings.

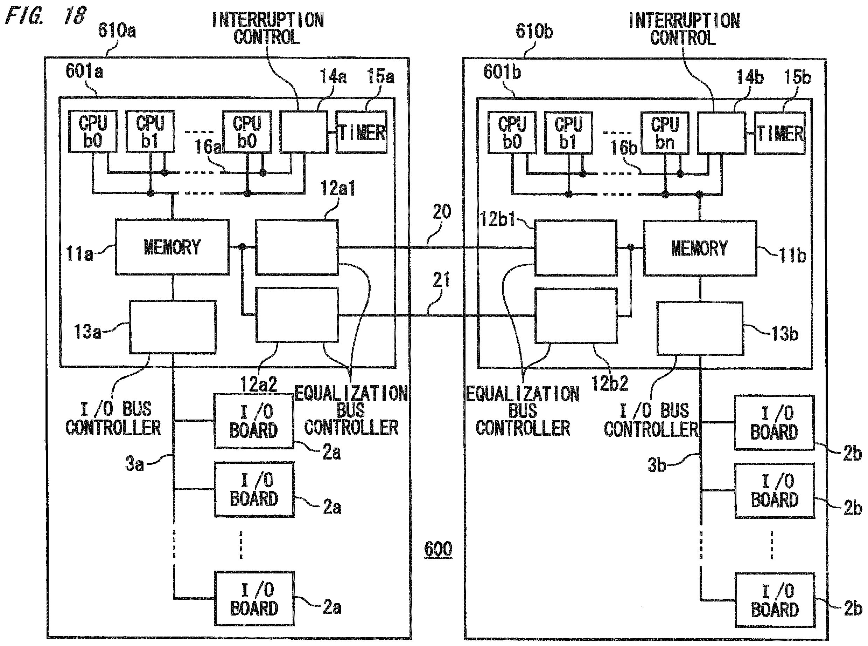

FIG. 18 is a diagram showing the configuration of a standby dual redundant system 600 (hereinafter, referred to as a system 600).

In a CPU board 601a of an active-side controller 610a, two equalization bus controllers 12a1 and 12b2 are provided.

In addition, in a CPU board 601b of a standby-side controller 610b, two equalization bus controllers 12b1 and 12b2 are provided.

The equalization bus controller 12a1 and the equalization bus controller 12b1 are connected via the equalization data bus 20, and the equalization bus controller 12a2 and the equalization bus controller 12b2 are connected via an equalization data bus 21.

By thus providing dual sets of equalization bus controllers and dual equalization data buses 20 and 21, reliability of the system 600 is enhanced.

Next, a transmission and reception method for transmission data using the dual equalization data buses in the system 600 will be described.

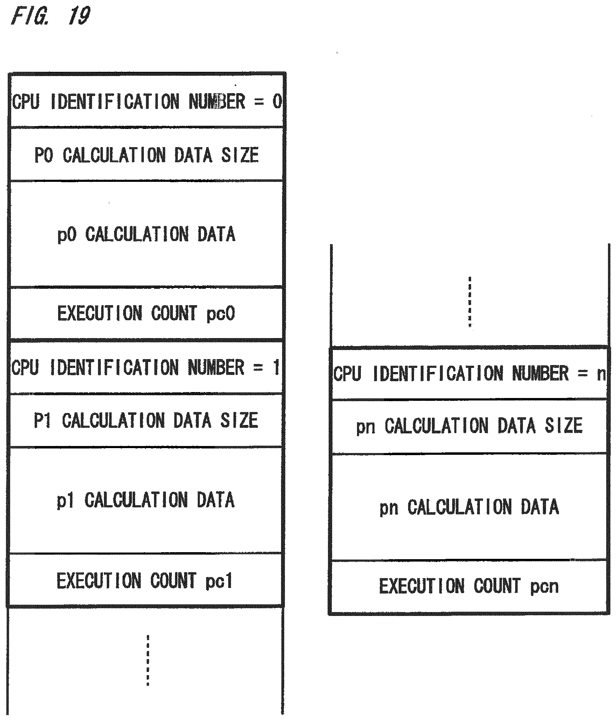

FIG. 19 is a diagram showing a part of the configuration of equalization transmission data transmitted from the active-side controller 610a to the standby-side controller 610b.

In the transmission data, the execution counts pc0 to pcn for respective calculation routines are provided as serial numbers.

For starting transmission of equalization data in Step ST1090 in FIG. 5, the CPU a0 of the active-side controller transmits the transmission data shown in FIG. 19 to the two controllers of the equalization bus controller 12a1 and the equalization bus controller 12a2.

At the expansion of the equalization reception data in Step ST2035 in FIG. 7 or in Step ST2115 in FIG. 8, each CPU of the standby-side controller compares the execution count of the equalization reception data received by the equalization bus controller 12b2 via the equalization bus controller 12a1 with the execution count of the equalization reception data received by the equalization bus controller 12b2 via the equalization bus controller 12a2, and expands one of these calculation data that has the larger count value in the memory 11b.

The standby dual redundant system 600 according to Embodiment 6 of the present invention has dual equalization bus controllers and dual equalization data buses and provides counts for data that is transmitted and received, whereby, even if a failure occurs on either route, data equalization can be performed by using the other route.

### Embodiment 7

Hereinafter, Embodiment 7 of the present invention will be described focusing on a difference from Embodiment 1 with reference to the drawings.

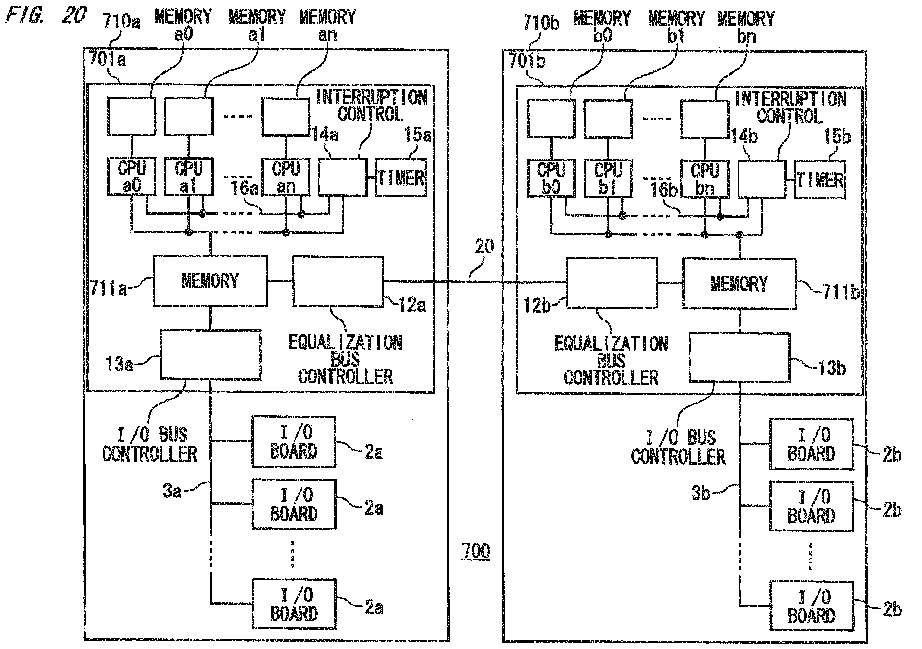

FIG. 20 is a diagram showing the configuration of a standby dual redundant system 700 (hereinafter, referred to as a system 700).

For the CPUs a0 to an on a CPU board 701a, individual memories a0 to an are respectively provided.

Similarly, for the CPUs b0 to bn on a CPU board 701b, individual memories b0 to bn are respectively provided.

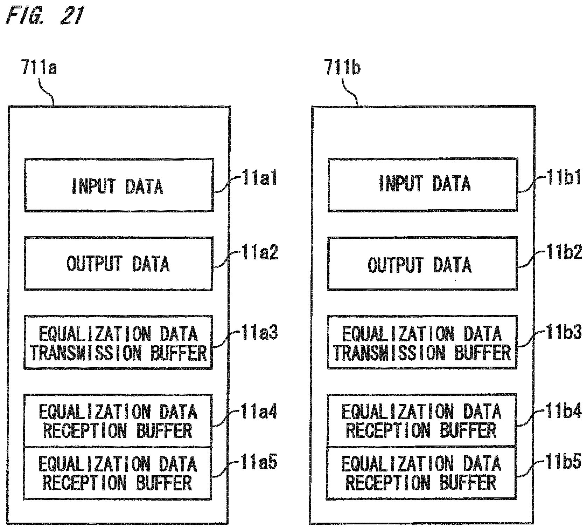

FIG. 21 is a diagram showing the data configurations in memories 711a and 711b which are commonly used by the CPUs in this case.

In the memory 711a, data commonly used by the CPUs a0 to an are placed.

Similarly, in the memory 711b, data commonly used by the CPUs b0 to bn are placed.

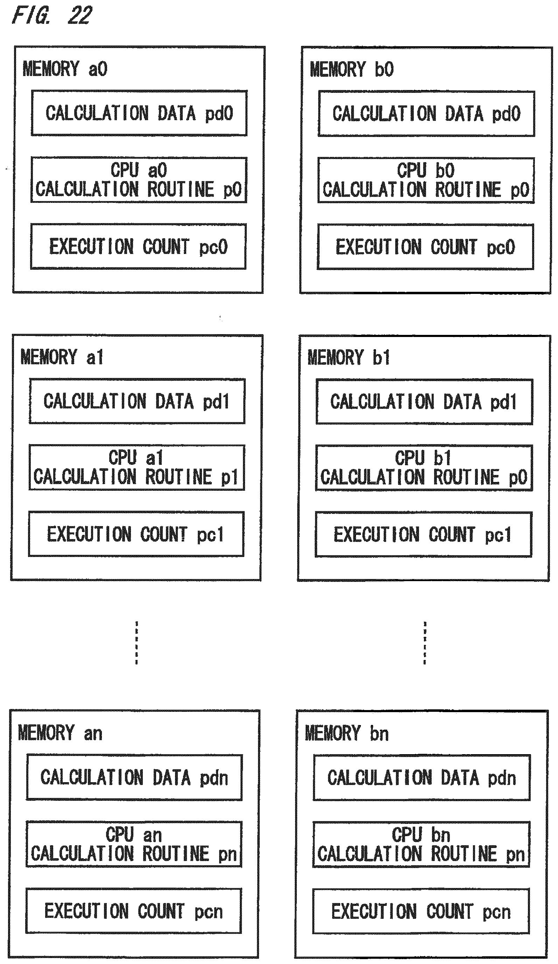

FIG. 22 is a diagram showing the configurations of the memories a0 to an and the memories b0 to bn individually added for the respective CPUs.

Only data individually used by the CPUs a0 to an and the CPUs b0 to bn are placed therein.

In the standby dual redundant system 700 according to Embodiment 7 of the present invention, the memory 711a or the memory 711b stores only data that are commonly used, so that the frequency of access to the memory 711a or the memory 711b can be suppressed.

Thus, the frequency of stoppage of calculation due to concentration of access from other CPUs is decreased, whereby the calculation performance of the system 700 can be improved.

### Embodiment 8

Hereinafter, Embodiment 8 of the present invention will be described focusing on a difference from Embodiment 1 with reference to the drawings.

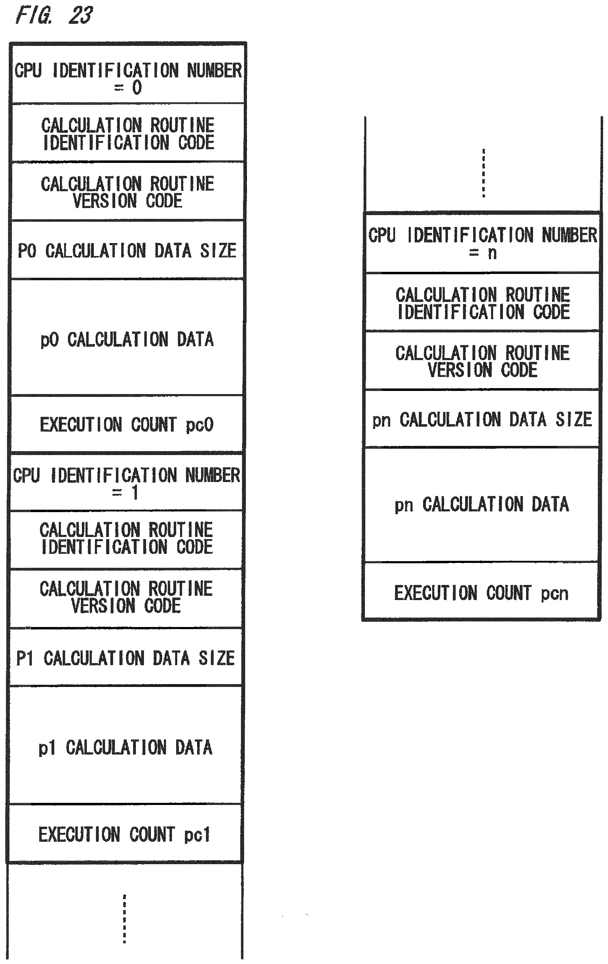

FIG. 23 is a diagram showing the configuration of equalization transmission data of Embodiment 8.

In the transmission data, an identification code and a version code of each calculation routine are added.

At the expansion of equalization data in Step ST2035 in FIG. 7 or in Step ST2115 in FIG. 8, each CPU of the standby-side controller compares the identification code and the version code of each calculation routine in the received equalization data with the identification code and the version code of each calculation routine that the standby-side controller has.

In the case where these codes do not coincide with each other, expansion processing for data is not performed and a user of the controller is notified of abnormality.

In the standby dual redundant system according to Embodiment 8 of the present invention, even if calculation routines of the active-side controller and the standby-side controller become different from each other, the entire system can be prevented from being equalized with wrong data, thus improving the reliability of the standby dual redundant system.

It is noted that, within the scope of the present invention, the above embodiments may be freely combined with each other, or each of the above embodiments may be modified or abbreviated as appropriate.

## Claims

1. A standby dual redundant system including two controllers, in which,
when one of the controllers is adapted to operate as an active-side controller, and the other controller is adapted to operate as a standby-side controller,
each controller (10a, 10b) comprising therein:
- a plurality of CPUs;
- a memory (11a, 11b), the memory storing calculation routines which are performed by the CPUs and which are allocated to a CPU, respectively;
- an I/O board (2a, 2b);
- an I/O bus controller (13a, 13b) for performing transmission and reception of data among the plurality of CPUs, the memory (11a, 11b), and the I/O board (2a, 2b); and
- an equalization bus controller (12a) for transmitting equalization data used for equalizing device states of the active-side controller (10a) and the standby-side controller (10b), from the active-side controller (10a) to the standby-side controller (10b) via an equalization data bus (20), the equalization bus controller (12a) being independent from the I/O bus controller (13a),
wherein the equalization data has an identification code and a version code of each calculation routine, and
each CPU of the standby-side controller (10b) is adapted to confirm, by comparing the identification code and the version code in said equalization data with identification code and version code of each calculation routine that the standby-side controller has, the identification code and the version code in said equalization data, to execute calculations of the respective calculation routines allocated to the respective CPUs of the standby-side controller based on said equalization data.

2. The system according to claim 1,
each controller (10a, 10b) further comprising:
- a timer (15a, 15b); and
- an execution control section for notifying each CPU to start processing in a constant cycle in accordance with the timer,
- wherein one of the CPUs of the active-side controller (10a), that has been notified by the execution control section of the active-side controller (10a), is adapted to acquire data used for calculation by each CPU of the active-side controller (10a) from the I/O board (2a), to input the data to the memory (11a) via the I/O bus controller (13a), and then to give an instruction to execute calculations allocated to the respective CPUs of the active-side controller (10a), and
after all the calculations by the CPUs have been finished, the one CPU is adapted to collect all results of the calculations by the CPUs to form the equalization data to be transmitted to the standby-side controller (10b).

3. The system according to claim 2,
wherein the memory (11a, 11b) has therein,
- input data (11a1, 11b1) for collectively storing data inputted from the I/O board (2a, 2b),
- a calculation routine (pn) for storing a calculation routine to be executed by each CPU,
- calculation data (pnd) for storing the input data (11a1, 11b1) that is used in each calculation routine (pn), a calculation result obtained by execution of the calculation routine (pn) using the input data (11a1, 11b1), and the previous calculation result,
- output data (11a2, 11b2) for collectively storing data to be outputted to the I/O board (2a, 2b),
- an equalization data transmission buffer (11a3) for collectively storing the equalization data to be transmitted to the standby-side controller (10b) when each controller operates as the active-side controller (10a), and
- two equalization data reception buffers (11b4, 11b5) for alternately receiving the equalization data from the active-side controller (10a) when each controller operates as the standby-side controller (10b).

4. The system according to claim 3,
wherein the standby-side controller (10b) is adapted to operate asynchronously with the active-side controller (10a) and in the same constant cycle as the active-side controller (10a), wherein one of the CPUs of the standby-side controller (10b), that has been notified to start processing by the execution control section of the standby-side controller (10b), is adapted to acquire data used for calculation by each CPU of the standby-side controller (10b) from the I/O board (2b) of the standby-side controller (10b), to input the data to the memory (11b) of the standby-side controller (10b) via the I/O bus controller (13b) of the standby-side controller (10b), and then to expand the equalization data received from the active-side controller (10a) in the memory (11b) of the standby-side controller (10b), to overwrite the data acquired from the I/O board (2b) of the standby-side controller (10b), and
wherein the one CPU is adapted to give an instruction to execute calculations allocated to the respective CPUs of the standby-side controller (10b).

5. The system according to claim 4, wherein
- the memory (11a, 11b) has attribute data of each calculation routine (pn), and
- the attribute data of each calculation routine (pn) has at least one of:
- CPU information for specifying a number of the CPU that executes each calculation routine (pn);
- execution cycle information for executing each calculation routine (pn) in a cycle of a multiple of the cycle of the timer (15a, 15b); offset information for executing each calculation routine with a predetermined offset provided with respect to the multiple of the cycle of the timer (15a, 15b),
execution times information indicating the number of times each calculation routine (pn) has been executed,
transmission times information indicating the number of times the equalization data has been transmitted to the standby-side controller (10b), and
continuous processing allowance information indicating a next processing method in the case where each calculation routine (pn) has not been finished within the cycle of the timer (15a, 15b).

6. The system according to claim 5, wherein
the attribute data stored in the memory (11a) of the active-side controller (10a) has the execution times information and the transmission times information, and
a data configuration of the equalization data is determined based on comparison between the execution times information and the transmission times information.

7. The system according to claim 5, wherein
the equalization data has the transmission times information, and the standby-side controller (10b) is adapted to execute calculations allocated to the respective CPUs, using one of the equalization data in the two equalization data reception buffers (11b4, 11b5), whose transmission times information indicates a larger number of times.

8. The system according to claim 5, wherein the memory includes,
- a CPU memory for storing data individually used by each CPU, and
- a common memory (711a, 711b) for storing data commonly used by the plurality of CPUs.

9. The system according to claim 1,
wherein the equalization bus controller and the equalization data bus are each provided in dual sets.

10. The system according to any one of claims 2 to 9,
wherein the one CPU is adapted to notify each CPU to start calculations allocated to the respective CPUs, by interruption control or based on identification of a state of a flag provided in the memory.

## Patentansprüche

1. Redundantes duales Standby-System mit zwei Steuerungen, bei dem, wenn die eine der Steuerungen dazu ausgebildet ist, als aktivseitige Steuerung und die andere Steuerung als Steuerung zu arbeiten,
jede Steuerung (10a, 10b) Folgendes aufweist:
- eine Vielzahl von CPUs;
- einen Speicher (11a, 11b), wobei der Speicher Berechnungsroutinen speichert, die von den CPUs ausgeführt standby-seitige werden und die jeweils einer CPU zugeordnet sind;
- eine I/O-Platine (2a, 2b);
- eine I/O-Bus-Steuerung (13a, 13b) zum Durchführen von Übertragung und Empfang von Daten unter der Vielzahl von CPUs, dem Speicher (11a, 11b) und der I/O-Karte (2a, 2b); und
- eine Ausgleichs-Bus-Steuerung (12a) zum Übertragen von Ausgleichsdaten, die zum Ausgleichen von Gerätezuständen der aktivseitigen Steuerung (10a) und der standby-seitigen Steuerung (10b) verwendet werden, und zwar von der aktivseitigen Steuerung (10a) zu der standby-seitigen Steuerung (10b) über einen Ausgleichsdaten-Bus (20), wobei die Ausgleichs-Bus-Steuerung (12a) unabhängig von der I/O-Bus-Steuerung (13a) ist,
wobei die Ausgleichsdaten einen Identifikationscode und einen Versionscode von jeder Berechnungsroutine aufweisen, und
wobei jede CPU der standby-seitigen Steuerung (10b) durch Vergleichen des Identifikationscodes und des Versionscodes in den Ausgleichsdaten mit dem Identifikationscode und dem Versionscode von jeder Berechnungsroutine, die die standby-seitige Steuerung aufweist, dazu ausgebildet ist, den Identifikationscode und den Versionscode in den Ausgleichsdaten zu bestätigen, und Berechnungen der entsprechenden Berechnungsroutinen auszuführen, die den jeweiligen CPUs auf der standby-seitigen Steuerung zugeordnet sind, und zwar basierend auf den Ausgleichsdaten.

2. System nach Anspruch 1,
wobei jede Steuerung (10a, 10b) ferner Folgendes aufweist:
- einen Timer (15a, 15b); und
- eine Ausführungs-Steuereinheit zum Benachrichtigen der jeweiligen CPU, die Verarbeitung in einem konstanten Zyklus gemäß dem Timer zu starten,
- wobei eine der CPUs der aktivseitigen Steuerung (10a), die mittels der Ausführungs-Steuereinheit der aktivseitigen Steuerung (10a) benachrichtigt worden ist, dazu ausgebildet ist: Daten zu erfassen, die für die Berechnung verwendet werden, und zwar mittels der jeweiligen CPU der aktivseitigen Steuerung (10a) und von der I/O-Platine (2a); die Daten über die I/O-Bus-Steuerung (13a) in den Speicher (11a) einzugeben; und dann einen Befehl zum Ausführen von Berechnungen zu geben, die den jeweiligen CPUs der aktivseitigen Steuerung (10a) zugeordnet sind, und nachdem alle Berechnungen der CPUs abgeschlossen sind, wobei die eine CPU dazu ausgelegt ist, alle Ergebnisse der Berechnungen der CPUs zu sammeln, um die Ausgleichsdaten auszubilden, die an die standby-seitige Steuerung (10b) übertragen warden sollen.

3. System nach Anspruch 2,
wobei der Speicher (11a, 11b) Folgendes aufweist,
- Eingangsdaten (11a1, 11b1) zum kollektiven Speichern von Daten, die von der I/O-Platine (2a, 2b) eingegeben worden sind,
- eine Berechnungsroutine (pn) zum Speichern einer Berechnungsroutine, die von der jeweiligen CPU ausgeführt werden soll,
- Berechnungsdaten (pnd) zum Speichern der Eingangsdaten (11a1, 11b1), die in der jeweiligen Berechnungsroutine (pn) verwendet werden, eines Berechnungsergebnisses, das durch Ausführen der Berechnungsroutine (pn) unter Verwendung der Eingangsdaten (11a1, 11b1) erhalten wird, und des vorherigen Berechnungsergebnisses,
- Ausgangsdaten (11a2, 11b2) zum kollektiven Speichern von Daten, die an die I/O-Platine (2a, 2b) ausgegeben werden sollen,
- einen Ausgleichsdaten-Übertragungspuffer (11a3) zum kollektiven Speichern der Ausgleichsdaten, die an die standby-seitige Steuerung (10b) zu übertragen sind, wenn die jeweilige Steuerung als aktivseitige Steuerung (10a) arbeitet, und
- zwei Ausgleichsdaten-Empfangspuffer (11b4, 11b5) zum abwechselnden Empfangen der Ausgleichsdaten von der aktivseitigen Steuerung (10a), wenn die jeweilige Steuerung als standby-seitige Steuerung (10b) arbeitet.

4. System nach Anspruch 3,
wobei die standby-seitige Steuerung (10b) dazu ausgebildet ist, asynchron mit der aktivseitigen Steuerung (10a) und im gleichen konstanten Zyklus wie die aktivseitige Steuerung (10a) zu arbeiten,
wobei die eine der CPUs der standby-seitige Steuerung (10b), die mittels der Ausführungs-Steuereinheit der standby-seitigen Steuerung (10b) dazu benachrichtigt worden ist, die Verarbeitung zu starten, dazu ausgebildet ist: Daten zu erfassen, die zur Berechnung verwendet werden, und zwar von der jeweiligen CPU der standby-seitigen Steuerung (10b) von der I/O-Platine (2b) der standby-seitigen Steuerung (10b); die Daten über die I/O-Bus-Steuerung (13b) der standby-seitigen Steuerung (10b) in den Speicher (11b) der standby-seitigen Steuerung (10b) einzugeben; und dann die von der aktivseitigen Steuerung (10a) empfangenen Ausgleichsdaten im Speicher (11b) der standby-seitigen Steuerung (10b) zu erweitern, um die von der I/O-Karte (2b) der standby-seitigen Steuerung (10b) erfassten Daten zu überschreiben, und
wobei die eine CPU dazu ausgebildet, einen Befehl zu geben, um Berechnungen auszuführen, die den jeweiligen CPUs der standby-seitigen Steuerung (10b) zugeordnet sind.

5. System nach Anspruch 4, wobei
- der Speicher (11a, 11b) Attributdaten von jeder Berechnungsroutine (pn) aufweist, und
- die Attributdaten von jeder Berechnungsroutine (pn) mindestens eine Komponente der Folgenden aufweisen:
- CPU-Informationen zum Spezifizieren einer Nummer der CPU, die die jeweilige Berechnungsroutine (pn) ausführt;
- Ausführungszyklusinformation zum Ausführen der jeweiligen Berechnungsroutine (pn) in einem Zyklus eines Vielfachen des Zyklus des Timers (15a, 15b);
- Offset-Information zum Ausführen der jeweiligen Berechnungsroutine mit einem vorbestimmten Offset, der bezogen auf das Vielfache des Zyklus des Timers (15a, 15b) vorgesehen ist,
- Ausführungshäufigkeitsangaben, die die Häufigkeit anzeigen, mit der jede Berechnungsroutine (pn) ausgeführt worden ist,
- Übertragungshäufigkeitsinformationen, die die Häufigkeit anzeigen, mit der die Ausgleichsdaten an die standby-seitige Steuerung (10b) übertragen worden sind, und Kontinuierliche-Verarbeitungs-Genehmigungsinformationen, die ein nachfolgendes Verarbeitungsverfahren anzeigen, falls jede Berechnungsroutine (pn) nicht innerhalb des Zyklus des Timers (15a, 15b) abgeschlossen worden ist.

6. System nach Anspruch 5,
wobei die im Speicher (11a) der aktivseitigen Steuerung (10a) gespeicherten Attributdaten die Ausführungshäufigkeitsinformationen und die Übertragungshäufigkeitsinformationen aufweisen, und
wobei eine Datenkonfiguration der Ausgleichsdaten basierend auf dem Vergleich zwischen den Ausführungshäufigkeitsinformationen und den Übertragungshäufigkeitsinformationen bestimmt wird.

7. System nach Anspruch 5,
wobei die Ausgleichsdaten die Übertragungshäufigkeitsinformationen aufweisen, und
wobei die standby-seitige Steuerung (10b) dazu ausgebildet ist, Berechnungen auszuführen, die den jeweiligen CPUs zugeordnet sind, und zwar unter Verwendung von einer der Ausgleichsdaten in den beiden Ausgleichsdatenempfangspuffern (11b4, 11b5), deren Übertragungshäufigkeitsinformationen eine höhere Häufigkeit anzeigen.

8. System nach Anspruch 5,
wobei der Speicher Folgendes aufweist,
- einen CPU-Speicher zum Speichern von Daten, die individuell von der jeweiligen CPU verwendet werden, und
- einen gemeinsamen Speicher (711a, 711b) zum Speichern von Daten, die von der Vielzahl von CPUs gemeinsam verwendet werden.

9. System nach Anspruch 1,
wobei die Ausgleichsbussteuerung und der Ausgleichsdatenbus jeweils in dualen Gruppen vorgesehen sind.

10. System nach einem der Ansprüche 2 bis 9,
wobei die eine CPU dazu ausgebildet ist, jede CPU zu benachrichtigen, Berechnungen zu starten, die den jeweiligen CPUs zugeordnet sind, und zwar mittels einer Unterbrechungssteuerung oder basierend auf der Identifizierung eines Zustands eines im Speicher angeordneten Flag.

## Revendications

1. Système de veille à double redondance incluant deux contrôleurs, dans lequel, lorsque l'un des contrôleurs est adapté à fonctionner en tant que contrôleur côté actif, l'autre contrôleur est adapté à fonctionner en tant que contrôleur côté veille,
chaque contrôleur (10a, 10b) comprenant :
- une pluralité d'unités centrales de traitement (CPU) ;
- une mémoire (11a, 11b), la mémoire stockant des routines de calcul qui sont effectuées par les CPU et qui sont respectivement affectées à une CPU ;
- une carte d'entrée-sortie (E/S) (2a, 2b) ;
- un contrôleur de bus d'E/S (13a, 13b) pour effectuer une transmission et une réception de données entre la pluralité de CPU, la mémoire (11a, 11b) et la carte d'E/S (2a, 2b) ; et
- un contrôleur de bus d'égalisation (12a) pour transmettre des données d'égalisation utilisées pour égaliser des états de dispositif du contrôleur côté actif (10a) et du contrôleur côté veille (10b), du contrôleur côté actif (10a) au contrôleur côté veille (10b) via un bus de données d'égalisation (20), le contrôleur de bus d'égalisation (12a) étant indépendant du contrôleur de bus d'E/S (13a),
dans lequel les données d'égalisation ont un code d'identification et un code de version pour chaque routine de calcul, et
chaque CPU du contrôleur côté veille (10b) est adaptée à confirmer, en comparant le code d'identification et le code de version dans lesdites données d'égalisation avec le code d'identification et le code de version de chaque routine de calcul que présente le contrôleur côté veille, le code d'identification et le code de version dans lesdites données d'égalisation pour exécuter les calculs des routines de calcul respectives affectées aux CPU respectives du contrôleur côté veille sur la base desdites données d'égalisation.

2. Système selon la revendication 1,
chaque contrôleur (10a, 10b) comprenant en outre :
- un timer (15a, 15b) ; et
- une section de contrôle d'exécution pour notifier à chaque CPU de démarrer le traitement selon un cycle constant conformément au timer,
- dans lequel l'une des CPU du contrôleur côté actif (10a), qui a été notifiée par la section de contrôle d'exécution du contrôleur côté actif (10a), est adaptée à acquérir des données utilisées pour le calcul par chaque CPU du contrôleur côté actif (10a) de la carte d'E/S (2a), pour entrer les données dans la mémoire (11a) via le contrôleur de bus d'E/S (13a), puis à donner une instruction pour exécuter les calculs affectés aux CPU respectives du contrôleur côté actif (10a), et
après que tous les calculs ont été effectués par les CPU, ladite une CPU est adaptée à collecter tous les résultats des calculs des CPU pour former les données d'égalisation à transmettre au contrôleur côté veille (10b).

3. Système selon la revendication 2,
dans lequel la mémoire (11a, 11b) contient
- des données d'entrée (11a1, 11b1) pour stocker collectivement des données entrées par la carte d'E/S (2a, 2b),
- une routine de calcul (pn) pour stocker une routine de calcul à exécuter par chaque CPU,
- des données de calcul (pnd) pour stocker les données d'entrée (11a1, 11b1) qui sont utilisées dans chaque routine de calcul (pn), un résultat de calcul obtenu par exécution de la routine de calcul (pn) utilisant les données d'entrée (11a1, 11b1), et le résultat de calcul précédent,
- des données de sortie (11a2, 11b2) pour stocker collectivement des données à délivrer à la carte d'E/S (2a, 2b),
- un tampon de transmission de données d'égalisation (11a3) pour stocker collectivement les données d'égalisation à transmettre au contrôleur côté veille (10b) lorsque chaque contrôleur fonctionne comme contrôleur côté actif (10a), et
- deux tampons de réception de données d'égalisation (11b4, 11b5) pour recevoir alternativement les données d'égalisation du contrôleur côté actif (10a) lorsque chaque contrôleur fonctionne comme contrôleur côté veille (10b).

4. Système selon la revendication 3,
dans lequel le contrôleur côté veille (10b) est adapté à fonctionner de manière asynchrone avec le contrôleur côté actif (10a) et dans le même cycle constant que le contrôleur côté actif (10a),
dans lequel une des CPU du contrôleur côté veille (10b), qui a été notifiée de démarrer le traitement par la section de contrôle d'exécution du contrôleur côté veille (10b), est adaptée à acquérir des données utilisées pour le calcul par chaque CPU du contrôleur côté veille (10b) de la carte d'E/S (2b) du contrôleur côté veille (10b), à entrer les données dans la mémoire (11b) du contrôleur côté veille (10b) via le contrôleur de bus d'E/S (13b) du contrôleur côté veille (10b), puis à développer les données d'égalisation reçues du contrôleur côté actif (10a) dans la mémoire (11b) du contrôleur côté veille (10b) pour écraser les données acquises de la carte d'E/S (2b) du contrôleur côté veille (10b), et
dans lequel ladite une CPU est adaptée à donner une instruction pour exécuter les calculs affectés aux CPU respectives du contrôleur côté veille (10b).

5. Système selon la revendication 4,
dans lequel
- la mémoire (11a, 11b) présente des données d'attribut de chaque routine de calcul (pn), et
- les données d'attribut de chaque routine de calcul (pn) présentent au moins l'un des éléments suivants :
- des informations de CPU pour spécifier un numéro de la CPU qui exécute chaque routine de calcul (pn) ;
- des informations de cycle d'exécution pour exécuter chaque routine de calcul (pn) dans un cycle d'un multiple du cycle du timer (15a, 15b) ;
- des informations de décalage pour exécuter chaque routine de calcul avec un décalage prédéterminé fourni par rapport au multiple du cycle du timer (15a, 15b),
- des informations de temps d'exécution indiquant le nombre de fois que chaque routine de calcul (pn) a été exécutée,
- des informations de temps de transmission indiquant le nombre de fois que les données d'égalisation ont été transmises au contrôleur côté veille (10b), et
- des informations de tolérance de traitement continu indiquant une méthode de traitement suivante dans le cas où chaque routine de calcul (pn) ne s'est pas terminée dans le cycle du timer (15a, 15b).

6. Système selon la revendication 5,
dans lequel les données d'attribut stockées dans la mémoire (11a) du contrôleur côté actif (10a) contiennent les informations de temps d'exécution et les informations de temps de transmission, et
dans lequel une configuration de données des données d'égalisation est déterminée sur la base de la comparaison entre les informations de temps d'exécution et les informations de temps de transmission.

7. Système selon la revendication 5,
dans lequel les données d'égalisation contiennent les informations de temps de transmission, et le contrôleur côté veille (10b) est adapté à exécuter les calculs affectés aux CPU respectives, en utilisant celles des données d'égalisation dans les deux tampons de réception de données d'égalisation (11b4, 11b5) dont les informations de temps de transmission indiquent un nombre de fois supérieur.

8. Système selon la revendication 5,
dans lequel la mémoire inclut :
- une mémoire de CPU pour stocker des données utilisées individuellement par chaque CPU, et
- une mémoire commune (711a, 711b) pour stocker des données utilisées en commun par la pluralité de CPU.

9. Système selon la revendication 1,
dans lequel le contrôleur de bus d'égalisation et le bus de données d'égalisation sont chacun prévus sous forme d'ensembles doubles.

10. Système selon l'une quelconque des revendications 2 à 9,
dans lequel ladite une CPU est adaptée à notifier à chaque CPU de démarrer les calculs affectés aux CPU respectives par commande d'interruption ou sur la base de l'identification d'un état d'un drapeau prévu dans la mémoire.
